# EUROPÄISCHE PATENTSCHRIFT

(11) **EP 0 462 583 B1**
(45) Veröffentlichungstag und Bekanntmachung des Hinweises auf die Patenterteilung: **06.12.1995**
(21) Anmeldenummer: 91110012.1
(22) Anmeldetag: 19.06.1991
(51) Int. Cl.: G05D 16/06

(54) **Membrangesteuerter Gasdruckregler**
Membrane controlled gas pressure regulator
Régulateur de pression de gaz commandé par une membrane

(30) Priorität: 21.06.1990 DE 4019757
(43) Veröffentlichungstag der Anmeldung: 27.12.1991
(73) Patentinhaber: HONEYWELL B.V., NL-1101 EA Amsterdam (NL)
(72) Erfinder: Vrolijk, Enno, NL-7751 BC Dalen (NL)
(74) Vertreter: Rentzsch, Heinz, Dipl.-Ing.

(56) Entgegenhaltungen:
- EP-A- 0 039 000
- EP-A- 0 230 477
- EP-A- 0 272 348
- GB-A- 945 477
- PATENT ABSTRACTS OF JAPAN vol. 6, no. 171 (P-140)(1049) 4. September 1982

## Beschreibung

Die Erfindung betrifft einen membrangesteuerten Gasdruckregler gemäß Oberbegriff des Anspruchs 1. Bei einem aus EP-A 0 230 477 bekannten Regler dieser Art ist außer dem den Schließkörper des Servoventils beeinflussenden elektromagnetischen Antrieb ein zweiter Magnetantrieb vorhanden, der der Einschaltung bzw. Ausschaltung des Druckreglers dient und auf diesen aufgesetzt ist. Er besteht aus einer Magnetspule und einem darin beweglichen Anker, der über einen Stift auf den Schließkörper des Hauptventils einwirkt. Bei stromlosem zweiten Magnetantrieb drückt eine Schließfeder den Schließkörper des Hauptventils gegen dessen Sitz, so daß dieses Hauptventil geschlossen und der Gasdruckregler unwirksam ist. Erst wenn Strom durch die Erregerspule des zweiten Magnetantriebs fließt, hebt dessen Anker gegen die Kraft der genannten Schließfeder vom Schließkörper des Hauptventils ab, so daß dieser nunmehr unter der Einwirkung des Gasdruckreglers beweglich ist und den Ausgangsdruck regeln kann.

Weiterhin zeigt die GB-A 20 22 784 einen membrangesteuerten Gasdruckregler mit einem von einer Membran getragenen Schließkörper des Hauptgasventils, einer auf die Membran einwirkenden Feder sowie einem die auf die Membran einwirkende Kraft beeinflussenden elektromagnetischen Antrieb. Dort stützt sich der im Innenraum einer Erregerspule beweglich geführte Anker eines Magnetantriebs einerseits an der Membran und andererseits an einer Rückstellfeder ab, deren gehäusefester Stützpunkt zwecks Voreinstellung der Federkraft verstellbar ist. Mit dem die Erregerspule durchfließenden Strom läßt sich die Position des von der Membran getragenen Schließkörpers des Gasventils und damit der Gasdurchsatz stufenlos regeln.

Ferner beschreibt die GB-PS 945 477 ein durch ein aus Düse und Prallplatte bestehendes Pilotventil gesteuertes Druckregelventil, bei dem eine von zwei gekoppelten Membranen den Ventilsitz eines zusätzlichen Abblasventils trägt. Der zugehörige Schließkörper ist mit dem Schließkörper des Hauptventils starr verbunden und öffnet das Hauptventil, sobald der genannte Ventilsitz unter der Einwirkung eines in der dahinterliegenden Antriebskammer wirkenden Steuerdrucks zunächst auf den Schließkörper des Abblasventils aufsetzt und damit dieses Abblasventil schließt und danach bei weiterer Bewegung über den Schließkörper des Abblasventils denjenigen des Hauptventils gegen die Kraft seiner Schließfeder vom Hauptventilsitz abhebt.

Ausgehend vom eingangs genannten Stand der Technik soll mit der vorliegenden Erfindung für ein Gasregelgerät ein membrangesteuerter Druckregler geschaffen werden, der mit geringem Energieaufwand eine Modulation des Ausgangsgasdrucks in Abhängigkeit von einem elektrischen Steuersignal gestattet, dabei einen auch für größere Gasdurchsätze ausreichenden Arbeitsbereich hat, eigensicher ist und möglichst einfach und zuverlässig aufgebaut ist. Dies gelingt mit der im Anspruch 1 gekennzeichneten Erfindung.

Gegenüber dem eingangs genannten bekannten Gasregler hat die Erfindung den Vorteil, daß für die Einschaltung des Gasreglers und für die Modulation seines Ausgangsdrucks nur ein einziger elektromagnetischer Antrieb, vorzugsweise ein Tauchspulantrieb benötigt wird. Durch die Verwendung des an sich bekannten Prinzips eines Servoantriebs mit einem die Kraft zum öffnen des Hauptventils zur Verfügung stellenden pneumatischen Servoantrieb läßt sich der Druckregler in einem großen Arbeitsbereich auch bei höheren Gasdrücken einsetzen. Die Eigensicherheit wird dadurch verbessert, daß der Einlaß-Gasdruck den Schließkörper des Hauptventils in Schließrichtung beaufschlagt. Da der elektromagnetische Antrieb nicht auf das Hauptventil selbst, sondern auf das Servoventil einwirkt, braucht er nur relativ geringe Kräfte aufzubringen, so daß der Regler nur einen geringen Erregerstrom benötigt. Der Druckregler erfüllt auch die in manchen Ländern üblichen Rückdruck-Prüfungen, weil ein solcher bei fehlendem Einlaßdruck auf den Reglerauslaß gegebener Prüfdruck unmittelbar auf die Membran einwirkt und über diese denSchließkörper des Hauptventils, unterstützt durch dessen Schließfeder, gegen den Hauptventilsitz zieht. Zugleich sorgt die relativ starke Schließfeder des Servoventils dafür, daß auch dieses geschlossen bleibt. Da die Membran nur gegen die relativ schwache Schließfeder des Hauptventils arbeitet, kommt die Hauptmembran mit einer relativ kleinen Arbeitsfläche aus, wodurch ein kompakter Aufbau des Reglers ermöglicht wird. Vorteilhafte Ausgestaltungen der Erfindung sind in den Unteransprüchen gekennzeichnet.

Die Erfindung wird nachfolgend anhand in den Zeichnungen wiedergegebener Ausführungsbeispiele erläutert. Darin zeigt
- Fig. 1: im Schnitt eine erste Ausführungsform des Druckreglers;
- Fig. 2: eine zweite Ausführungsform, bei welcher durch zwei auf das Reglergehäuse aufgesetzte Druckbegrenzer sowohl der minimale als auch der maximale Druck am Ausgang des Druckreglers getrennt einstellbar ist;
- Fig. 3: eine dritte Ausführungsform mit einem der Einstellung des Maximaldrucks dienenden Druckbegrenzer, wobei der Minimaldruck elektrisch durch einen vorgegebenen Mindest-Erregerstrom einstellbar ist; und
- Fig. 4a bis 4c: den Verlauf des Ausgangsdrucks P des Reglers in Abhängigkeit vom Erregerstrom I des Tauchspulsantriebs für die drei dargestellten Ausführungsbeispiele des Druckreglers.

Allen drei Ausführungsformen ist gemeinsam, daß ein einziger Antrieb, nämlich ein Tauchspulantrieb, sowohl dem öffnen des Hauptventils als auch der Modulation des Gasstroms in Abhängigkeit von einem elektrischen Steuersignal dient. Dieses Steuersignal wird beispielsweise durch einen temperaturabhängigen Widerstand erzeugt, welcher ggf. über einen Verstärker den Strom durch die Erregerspule des elektromagnetischen Antriebs beeinflußt. Der Druckregler 1 ist jeweils als Teil eines Gasregelventils dargestellt, welches beispielsweise außer dem Druckregler ein diesem vorgeschaltetes Einschalt-Magnetventil 2 oder ein von einem Flammenwächter gesteuertes Sicherheitsventil enthalten kann. Der Druckregler hat ein zweiteiliges Gehäuse, dessen Unterteil 3 zwischen Einlaß 4 und Auslaß 5 den Ventilsitz 6 des Hauptgasventils und dessen Schließkörper 7 aufnimmt, während das Gehäuseoberteil 8 den Tauchspulantrieb umgibt. Dieser besteht aus einem Ringmagneten 9 zwischen den beiden Jochen 10 und 11 sowie einem am oberen Joch 10 befestigten Kern 12 und der im Luftspalt zwischen Kern 12 und Joch 11 frei beweglichen Tauchspule 13. Der die Tauchspule 13 tragende zylindrische Träger 14 ist an zwei parallelen Scheiben- oder Blattfedern 15 befestigt, welche einerseits der verschiebbaren Lagerung der Tauchspule 13 und andererseits der Stromzufuhr zur Tauchspule dienen (vgl. DE-GM 90 07 086).

Der Schließkörper 7 des Hauptgasventils wird von der Membran 16 getragen, die mit ihrem Umfangswulst 17 zwischen den beiden Gehäuseteilen eingespannt ist. Der rohrförmige Schaft 19 des Schließkörpers 7 ist an der Membran 16 befestigt und zwar mit Hilfe einer Buchse 20, deren unteres Ende 21 als Ventilsitz für ein Servoventil ausgebildet ist. Der Schließkörper 22 dieses Servoventils ist an einer Stange 23 befestigt, welche durch die Buchse 20 und damit auch durch die Membran 16 hindurchragt. Sie trägt einen Federteller 24 und stützt sich über diesen und eine Kegelfeder 25 federnd am Gehäuseoberteil 8 ab. Diese relativ starke Feder 25 zieht somit den Schließkörper 22 gegen den Ventilsitz 21. Eine wesentlich schwächere Schraubenfeder 26 stützt sich mit ihrem unteren Ende an einer Zwischenwand 27 des Gehäuseunterteils ab und liegt auf der gegenüberliegenden Seite an der Membran 16 an. Die oberhalb der Membran 16 befindliche Antriebskammer 28 steht über ein zentrales Loch 29 im Gehäuseoberteil 8 mit dem Raum 30 in Verbindung. Um diesen gegenüber dem Tauchspulantrieb abzudichten, ist eine weitere Membran 31 als Trennmembran vorgesehen. Die Tauchspule 13 wirkt über ihren Spulenträger 14 und den Teller 32 auf das dem Schließkörper 22 abgewandte Ende 33 der Ventilstange 23 des Servoventils ein.

Der Druckregler ist im stromlosen Zustand seiner Erregerspule 13 dargestellt. Die relativ starke Schließfeder 25 des Servoventils 21,22 drückt über die Ventilstange 23 sowie Schließkörper 22 und Sitz 21 des Servoventils die Membran 16 nach oben und mit ihr den Schließkörper 7 gegen den Ventilsitz 6. Das Hauptventil ist geschlossen. Unterstützt wird die Schließfeder 26 bei geöffnetem Sicherheitsventil 2 durch den ebenfalls in Schließrichtung auf den Schließkörper 7 einwirkenden Gasdruck am Einlaß 4.

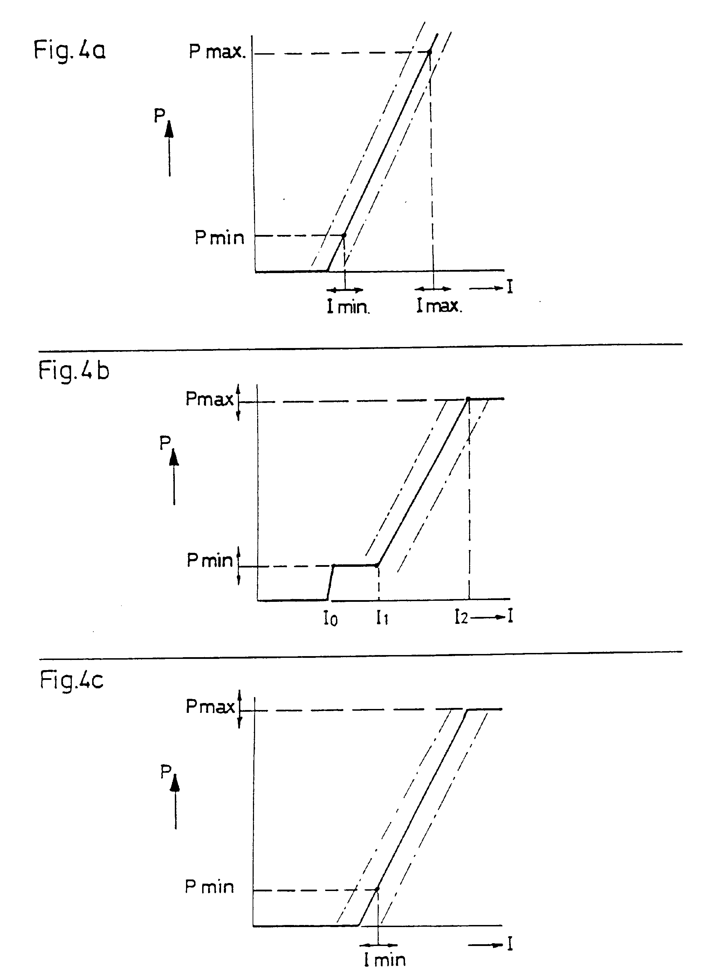

Soll Gas zu einem nachgeschalteten Brenner strömen, weil ein zu beheizender Raum eine zu niedrige Temperatur hat oder Warmwasser aufgeheizt werden soll, so erzeugt ein elektrischer Thermostat herkömmlicher Bauart einen Strom I durch die Erregerspule 13, dessen Stärke dem gewünschten Wärmebedarf proportional ist. Dieser Stromfluß bewirkt, daß die Tauchspule 13 samt Spulenträger 14 nach unten verschoben wird und beim überschreiten eines vorgegebenen Mindeststroms Iₘᵢₙ (vgl. Fig. 4a) den Teller 32 gegen das Ende 33 der Ventilstange 23 drückt und über diese den Schließkörper 22 des Servoventils 21,22 von dessen Ventilsitz 21 abhebt. Damit strömt Gas vom Einlaß 4 über das Servoventil 21,22 durch die Buchse 20 in den Raum 30 und von dort durch das Loch 29 in die Antriebskammer 28. Der sich dort aufbauende Druck überwindet die Schließkraft der Feder 26 sowie die durch den Einlaßdruck auf den Schließkörper 7 ausgeübte Kraft und hebt den Schließkörper 7 des Hauptgasventils von seinem Ventilsitz 6 ab. Da die Fläche der Membran 16 wesentlich größer ist als die wirksame Ringfläche des Schließkörpers 7, kann der Druck in der Antriebskammer 18 das Hauptventil 6,7 öffnen. Damit gelangt entsprechend dem freigegebenen Querschnitt im Ventilsitz 6 Gas vom Einlaß 4 zum Auslaß 5 des Druckreglers 1. Mit der Bewegung der Membran 16 nach unten verschiebt sich gleichzeitig der von der Membran gehaltene Ventilsitz 21 ebenfalls nach unten in Richtung auf den Schließkörper 22, dessen Position durch den Erregerstrom in der Tauchspule 13 vorgegeben ist. Es stellt sich somit ein Gleichgewicht ein, bei dem das Hauptventil 6,7 gerade so weit geöffnet ist, daß das Servoventil 21,22 den für diese Offenstellung erforderlichen Druck in der Antriebskammer 28 entstehen läßt.

Soll die Gaszufuhr zum Brenner erhöht werden, weil der Thermostat einen erhöhten Wärmebedarf anzeigt, so liefert der Thermostat einen dementsprechend vergrößerten Strom an die Spule 13 und diese bewegt sich weiter nach unten. Das Hauptventil 6,7 wird entsprechend der geschilderten Betriebsweise weiter geöffnet. Nimmt hingegen der Wärmebedarf ab und soll somit der Gasdurchlaß verringert werden, so bewegt sich die Tauchspule 13 nach oben. Damit die Ventilstange 23 dieser Bewegung folgen kann, muß sich auch der Ventilsitz 21 nach oben bewegen. Dies wird dadurch ermöglicht, daß der Druck in der Antriebskammer 28 über einen Kanal 35 zwischen Antriebskammer 28 und Auslaß 5 abgebaut wird. Dieser Kanal 35 ist mit einer Drosselstelle 37 versehen, damit sich beim öffnen des Ventils ein hinreichender Steuerdruck in der Antriebskammer 28 aufbauen kann.

Steigt der Druck auf der Verbraucherseite, d. h. am Auslaß 5 an, beispielsweise weil einer von mehreren Verbrauchern abgeschaltet wird, so verringert sich wegen der dann ebenfalls verringerten Druckdifferenz zwischen Antriebskammer 28 und Auslaß 5 die Abströmung des Steuerdrucks durch den Kanal 35, und der Steuerdruck in der Kammer 28 nimmt zu. Dies bedeutet, einen gleichgebliebenen Strom durch die Spule 13 vorausgesetzt, daß der von unten auf die Trennmembran 31 einwirkende Druck zunimmt und sich somit die Tauchspule 13 nach oben verschiebt. Damit folgt die Ventilstange 23 dieser Bewegung und nimmt auch den Schließkörper 22 mit nach oben. Das zuvor geschilderte Gleichgewicht stellt sich dann in einer Position des Schließkörpers 22 ein, die wie erwähnt nach oben verschoben ist, so daß auch der Schließkörper 7 des Hauptgasventils 6,7 weiter in Richtung auf den Ventilsitz 6 verschoben wird und somit den Druchlaß zwischen Einlaß 4 und Auslaß 5 soweit drosselt, daß der Druck am Auslaß 5 wieder den zuvor durch den Strom in der Spule 13 vorgegebenen Wert annimmt.

Fällt umgekehrt der Druck am Auslaß 5 ab, so laufen die gleichen Vorgänge in entgegengesetztem Sinn ab bis der Druck wieder den durch den Spulenstrom vorgegebenen Wert annimmt. Entsprechendes gilt für Schwankungen des Drucks am Einlaß 4.

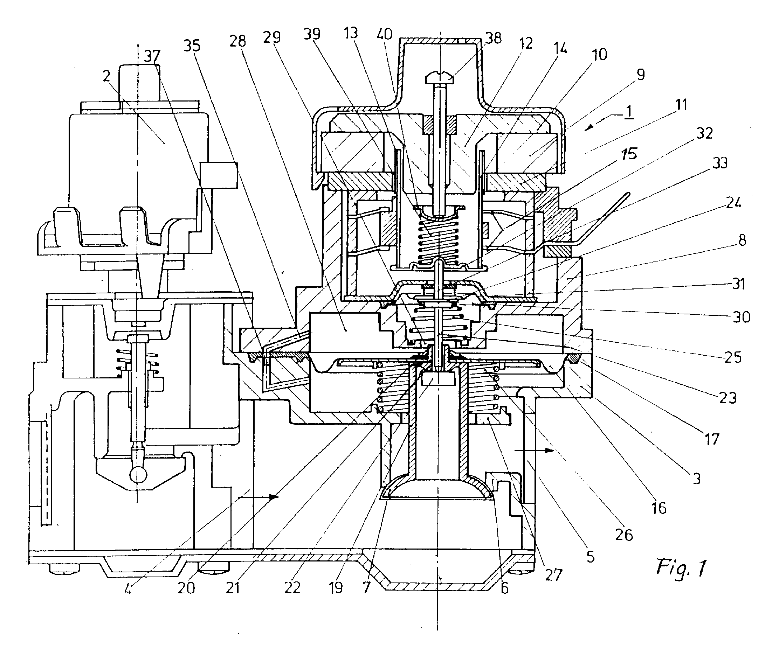

Sobald bei fehlendem Wärmebedarf der Strom durch die Tauchspule 13 abgeschaltet wird, drückt die relativ starke Feder 25 über den Federteller 24 die Ventilstange 23 nach oben und nimmt über den Schließkörper 22 und den Sitz 21 des Servoventils auch die Membran 16 samt Schließkörper 7 des Hauptventils mit nach oben. Auf diese Weise wird der Durchlaß zwischen Einlaß 4 und Auslaß 5 gesperrt. Bei der Ausführungsform nach Fig. 1 werden sowohl der minimale Gasdruck Pₘᵢₙ als auch der maximale Gasdruck Pₘₐₓ durch den die Spule 13 durchfließenden Strom I bestimmt. Die Schraube 38 ist im Kern 12 verstellbar. Mit ihr kann zur Nullpunktverschiebung der Modulationskennlinie (vgl. gestrichelte Linie in Fig. 4a) über den Teller 40 die Vorspannung der relativ schwachen Schraubenfeder 39 eingestellt werden.

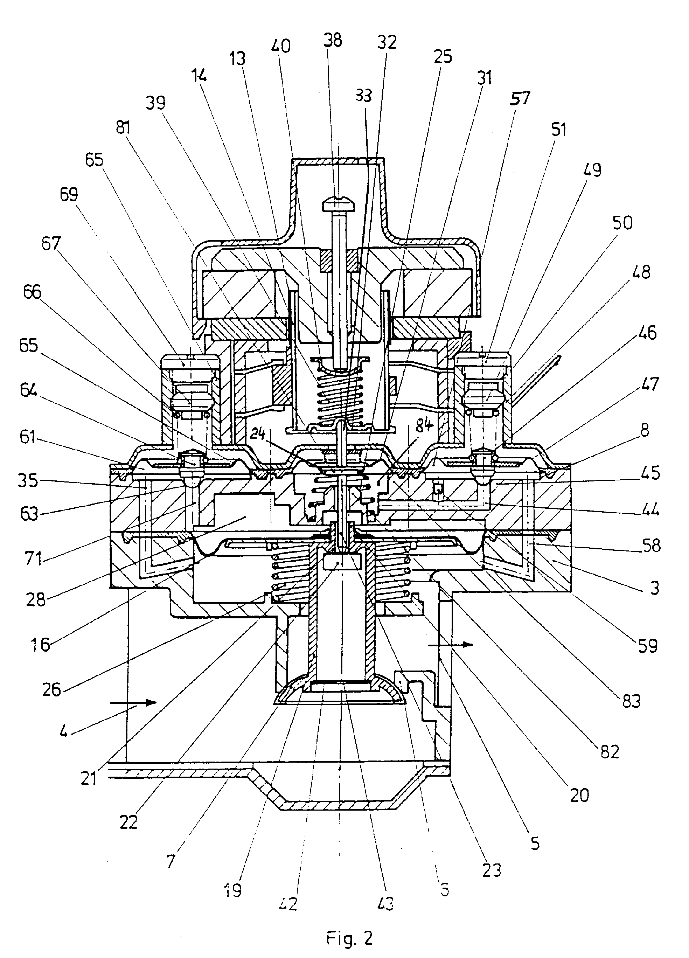

Während bei der anhand von Fig. 1 beschriebenen Ausführungsform des Druckreglers der minimale und der maximale Ausgangsdruck und somit auch der Modulationsbereich zwischen diesen beiden Drücken durch den minimalen und den maximalen Strom in der Erregerspule des Tauchspulantriebs bestimmt wird, zeigt Fig. 2 in Verbindung mit Fig. 4b eine Ausführungsform, bei welcher getrennte mechanische Einstellmodule für den minimalen und den maximalen Ausgangsdruck vorhanden und auf das Oberteil 8 des Druckreglers aufgesetzt sind. Das im Unterteil 3 untergebrachte Hauptgasventil und der Tauchspulantrieb haben im wesentlichen den gleichen Aufbau wie in Fig. 1. In den rohrförmigen Tragkörper 19 des Schließkörpers 7 des Hauptgasventils ist eine Scheibe 42 mit einer düsenförmigen öffnung 43 eingesetzt. Durch diese öffnung gelangt der Versorgungsdruck vom Einlaß 4 in den Innenraum des Rohrstücks 19 und damit an das Servoventil 21,22. Wiederum werden in der Ruhestellung sowohl das Servoventil 21,22 als auch das Hauptventil 6,7 durch die starke Schließfeder 25 des Servoventils in Schließstellung gehalten. Die Schließfeder 25 wirkt in der zuvor beschriebenen Weise unmittelbar auf den Schließkörper 22 des Servoventils und über diesen und dessen Ventilsitz 21 sowie die von der Membran 16 getragene Buchse 20 gleichzeitig auch auf den Schließkörper 7 des Hauptventils 6,7 ein. Auch hier ist die Feder 26 relativ schwach und die Feder 25 stark, um beide Ventile in der Ruhestellung und bei etwaigen Rückdruckprüfungen in Schließstellung zu halten.

Der Schließkörper 22 des Servoventils 21, 22 ist über die Ventilstange 23 starr mit dem Schließkörper 81 eines zusätzlichen Steuerventils verbunden. Sein Ventilsitz 82 ist in einer Trennwand 83 vorgesehen, welche zusammen mit der Membran 31 eine Membrankammer 84 bildet. Die wiederum relativ starke Schraubenfeder 25 drückt einerseits über den Membranteller 24 den Schließkörper 81 des Steuerventils 81, 82 vom Sitz 82 weg in Richtung Offenstellung und spannt andererseits das Servoventil 21, 22 in Schließstellung vor. Der Träger 14 für die Tauchspule 13 wirkt mit seinem Teller 32 auf das Ende 33 der Ventilstange 23 ein.

Ein erstes Hilfsventil, bestehend aus Ventilsitz 45 und Schließkörper 46, welches der Einstellung des minimalen Ausgangsgasdrucks dient, ist über Kanal 44 mit der Membrankammer 84 verbunden. Dieses erste Hilfsventil umfaßt ferner eine den Schließkörper 46 tragende Membran 47, eine die Membran samt Schließkörper 46 in Schließrichtung vorspannende Feder 48 sowie eine verstellbare Abstützschraube 49 zum Einstellen der Vorspannung der Feder 48. Die Schraube 49 ist in einem zylindrischen Rohrstück 50 verstellbar, welches nach außen hin durch einen Stopfen 51 abgedeckt ist. Der Raum 57 unter der Membran 47 ist über einen Kanal 58 mit dem Auslaß 5 und über einen düsenförmig verengten Kanal 59 mit der Membrankammer 84 verbunden. Die Antriebskammer 28 steht über einen Durchlaß 71 mit dem Ventilsitz 63 eines zweiten Hilfsventils und hinter diesem Ventilsitz über einen Kanal 35 mit dem Auslaß 5 in Verbindung.

Dieses zweite Hilfsventil umfaßt einen Ventilsitz 63 sowie einen zugehörigen Schließkörper 64, der von der Membran 65 getragen ist. Auch diese Membran stützt sich über eine Feder 66 an einer Einstellschraube 67 ab, welche in einem Gewinde des Rohrstücks 68 verstellbar ist. Nach außen hin ist dieses Rohrstück durch einen Stopfen 69 abgedeckt. Der Ventilsitz 63 des zweiten Hilfsventils mündet über den Durchlaß 71 in den Raum 28 oberhalb der Membran 16.

Mit dem ersten Hilfsventil 45 bis 51 läßt sich der minimale Ausgangsdruck am Auslaß 5 und mit dem zweiten Hilfsventil 63 bis 69 läßt sich der maximale Ausgangsdruck einstellen, und zwar sind beide Druckeinstellungen unabhängig voneinander möglich. Die beiden Hilfsventile arbeiten als Steuerdruckbegrenzer.

In der in Fig. 2 wiedergegebenen Ruhestellung sind alle Ventile, nämlich das Hauptventil 6,7, das Servoventil 21,22, das erste Hilfsventil 45,46 sowie das zweite Hilfsventil 63,64 unter der Einwirkung ihrer Schließfedern 25,48,66 geschlossen. Sobald der Tauchspule 13 Strom zugeführt wird, bewegt sich der Spulenkörper 14 und mit ihm der Federteller 32 samt Ventilstange 23 nach unten. Sobald das Servoventil 21,22 öffnet, gelangt der durch das Loch 43 in der Scheibe 42 eintretende Eingangsdruck in die Antriebskammer 28 und bewegt über die Membran 16 den Schließkörper 7 des Hauptventils nach unten, so daß dieses gegen die Kraft der schwachen Feder 26 öffnet. Der Druck P am Ausgang 5 nimmt dann den Wert Pₘᵢₙ an (siehe Fig. 4b). Dieser Wert wird bestimmt durch die Stellung des Schließkörpers 46 des ersten Hilfsventils gegenüber seinem Sitz 45. Sobald nämlich in der geschilderten Weise das Hauptventil öffnet und am Ausgang 5 ein Ausgangsdruck entsteht, gelangt dieser auch über den Kanal 58 in die Antriebskammer 57 des ersten Hilfsventils. Der Druck unter der Membran 47 hebt den Schließkörper 46 vom Ventilsitz 45 um einen solchen Betrag ab, daß sich ein Kräftegleichgewicht einstellt zwischen der von oben auf die Membran 47 einwirkenden Kraft der Feder 48 und der von unten auf die Membran einwirkenden Kraft, die durch den Druck in der Kammer 57 erzeugt wird. Dieses Kraftgleichgewicht bestimmt den Mindestdruck Pₘᵢₙ.

Nimmt der Strom I (vgl. Fig. 4b) von dem das öffnen des Hilfsventils 45,46 bewirkenden Minimalstrom Iₘᵢₙ weiter zu, so ändert sich am Ausgangsdruck P zunächst nichts. Mit dem zunehmenden Strom bewegt sich zwar die Spule 13 samt Spulenträger 14 und Ventilstange 23 weiter nach unten. Der Steuerdruck wird aber noch immer bestimmt durch das Hilfsventil 45, 46 und ändert sich nicht, so daß das Hauptventil seine öffnungslage beibehält. Erst bei weiterer Erhöhung des Stroms schließt das Steuerventil 81, 82, so daß sich nunmehr in der Kammer 28 ein Steuerdruck aufbaut, der über die Hauptmembran 16 und gegen die relativ schwache Feder 26 das Hauptventil 6, 7 öffnet. Das Servoventil 21, 22 ist völlig geöffnet, und hat kein Einfluß auf den Steuerdruck mehr. Damit beginnt beim Anfangsstrom I₁ der Modulationsbereich zwischen dem Mindestdruck Pₘᵢₙ und dem oberen Druckgrenzwert Pₘₐₓ (vgl. Fig. 4b).

Der letztgenannte Druckwert läßt sich mit Hilfe des zweiten Hilfsventils 63,64 einstellen. Überschreitet nämlich der Druck in den Membrankammern 57 und 61 der beiden Hilfsventile einen vorgegebenen oberen Grenzwert Pₘₐₓ, so hebt die Membran 65 den Schließkörper 64 vom Ventilsitz 63 ab, so daß ein weiterer Druckanstieg in der Antriebskammer 28 durch öffnen eines Weges durch den Kanal 71 und das zweite Hilfsventil 63,64 über den Kanal 35 verhindert wird. Auch hier stellt sich ein Kräftegleichgewicht ein, gegeben durch den Druck in der Kammer 61 einerseits und die auf die Gegenseite der Membran 65 von der Feder 66 ausgeübte Kraft andererseits. Der Minimaldruck wird mit Hilfe der Einstellschraube 49 und der Maximaldruck mit Hilfe der Einstellschraube 67 eingestellt, ohne daß sich diese beiden Einstellungen gegenseitig beeinflussen.

Nimmt bei vorgegebenem Strom durch die Tauchspule 13 der Ausgangsdruck aus irgendwelchen Gründen zu, so wächst die nach oben gerichtete, auf die Membran 16 einwirkende Kraft an. Über den Kanal 58, das geöffnete Ventil 45, 46 und den Kanal 44, nimmt der Druck in der Membrankammer 84 auch zu. So wächst die nach oben gerichtete auf die Membran 31 wirkende Kraft an, und hebt den Schließkörper 81 vom Ventilsitz 82 ab.

Damit verringert sich der in der Antriebskammer 28 wirksame Steuerdruck auf die Membran 16 und diese wird mit Hilfe der Feder 26 nach oben bewegt und nimmt den Schließkörper 7 mit. Der Durchlaß zwischen Schließkörper 7 und Ventilsitz 6 wird verringert und der Ausgangsdruck wird auf den zuvor eingestellten Wert zurückgeführt. Beim Abschalten der Tauchspule schließt das Servoventil 21,22 unter dem Einfluß seiner Rückstellfeder 25, und der Steuerdruck wird über den Kanal 44 sowie den düsenförmigen Durchlaß 59 zwischen Kammer 84 und Kanal 58 zum Auslaß hin abgebaut. Damit schließt auch das Hauptventil 6,7. Während zwischen den Stromwerten I₀ und I₁ eine zum zuverlässigen Zünden eines über den Druckregler versorgten Brenners ausreichende Mindestgasmenge zur Verfügung gestellt wird, erfolgt zwischen dem unteren Stromwert I₁ und dem oberen Stromwert I₂ eine Modulation des Gasdrucks P in Abhängigkeit vom Wärmebedarf eines mit Hilfe des Brenners beheizten Raums oder eines sonstigen Verbrauchers. Dabei ändert sich der Ausgangsdruck zwischen den Werten Pₘᵢₙ und Pₘₐₓ. Wie beim Ausführungsbeispiel gemäß Fig. 1 ist auch hier mit der Schraube 38 die Nullpunktverschiebung der Modulationskennlinie einstellbar.

In Fig. 4a ist durch die waagerechten Doppelpfeile längs der Strom-Achse angedeutet, daß die Einstellung des minimalen und des maximalen Ausgangsdrucks elektrisch durch entsprechende Einstellung des Erregerstroms für die Tauchspule 13 erfolgt. Dies gilt für die Ausführungsform nach Fig. 1. In Fig. 4b hingegen ist durch die vertikalen Doppelpfeile im Bereich der Druck-Achse angedeutet, daß die Einstellung von minimalem und maximalem Ausgangsdruck mechanisch mit Hilfe der beiden den Steuerdruck begrenzenden Hilfsventile oder Begrenzermodule durchgeführt wird.

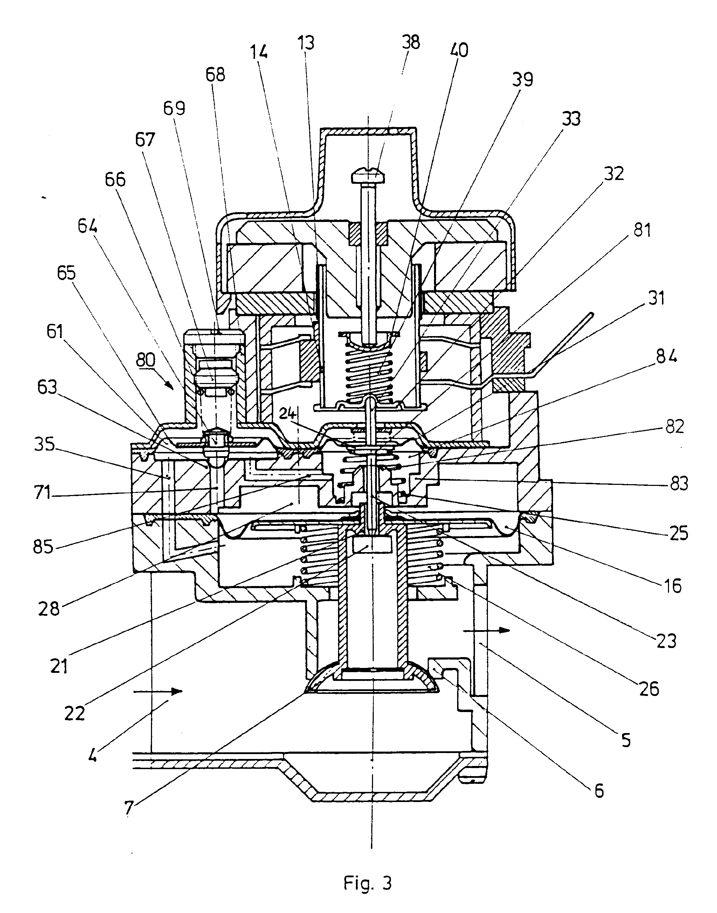

Die Ausführungsform nach Fig. 3 hingegen sieht entsprechend der Kurvendarstellung gemäß Fig. 4c eine mechanische Einstellung des maximalen Ausgangsdrucks Pₘₐₓ (siehe senkrechter Doppelpfeil) und eine elektrische Einstellung des minimalen Ausgangsdrucks Pₘᵢₙ (siehe waagerechter Doppelpfeil) vor. In Fig. 4 bedeutet ein waagerechter Doppelpfeil jeweils eine elektrische Einstellung und ein senkrechter Doppelpfeil eine mechanische Einstellung.

Das Ausführungsbeispiel gemäß Fig. 3 sieht also nur einen Einstellmodul 80 zur mechanischen Einstellung des maximalen Ausgangsdrucks vor, während der minimale Ausgangsdruck elektrisch über den Spulenstrom eingestellt wird. Dieser Modul 80 hat den gleichen Aufbau wie der Modul oder Druckbegrenzer 61 bis 69 in Fig. 2. Soweit weitere Teile mit denjenigen der zuvor erläuterten Ausführungsbeispiele übereinstimmen, sind auch hier gleiche Bezugszeichen verwendet worden. Der Schließkörper 22 des Servoventils 21,22 ist wie in Fig. 2 über die Ventilstange 23 starr mit dem Schließkörper 81 eines Steuerventils verbunden. Sein Ventilsitz 82 ist in einer Trennwand 83 vorgesehen, welche zusammen mit der Membran 31 eine Membrankammer 84 bildet. Die wiederum relativ starke Schraubenfeder 25 drückt einerseits über den Ventilteller 24 den Schließkörper 81 des Steuerventils 81,82 vom Sitz 82 weg in Richtung Offenstellung und spannt andererseits das Servoventil 21,22 in Schließstellung vor. Der Träger 14 für die Tauchspule 13 liegt mit seinem Teller 32 auf dem Ende 33 der Ventilstange. Ein Kanal 35 verbindet die Membrankammer 61 des Begrenzermoduls 80 mit dem Raum unterhalb der Hauptmembran 16 und damit zugleich mit dem Auslaß 5.

Der Kanal 85 stellt eine Verbindung zwischen den Membrankammern 61 und 84 her. Darüber hinaus steht der Ventilsitz 63 des Moduls 80 über den Kanal 71 mit der Kammer 28 in Verbindung. Hinsichtlich der Maximaldruckbegrenzung arbeitet folglich das Ausführungsbeispiel gemäß Fig. 3 ähnlich wie in Fig. 2.

Sobald der Tauchspule 13 Strom zugeführt wird, bewegt diese über den Teller 32 und den Federteller 24 die Ventilstange 23 samt der beiden von ihr getragenen Schließkörper 81 und 22 nach unten. Dabei öffnet das Servoventil 21,22. Gleichwohl entsteht in der Kammer 28 kein Servodruck, weil diese durch das Steuerventil 81,82 und den Kanal 85, 35 zum Auslaß hin offen ist. Erst bei weiterer Erhöhung des Stroms bis zum Wert Iₘᵢₙ (vgl. Fig. 4c) schließt das Steuerventil 81,82, während das Servoventil 21, 22 völlig geöffnet ist, so daß sich nunmehr in der Kammer 28 ein Steuerdruck aufbaut, der über die Hauptmembran 16 und gegen die relativ schwache Feder 26 das Hauptventil 6,7 öffnet. Überschreitet der Ausgangsdruck einen durch die Einstellschraube 67 im Begrenzermodul 80 vorgegebenen Wert, so hebt die Membran 65 den Schließkörper 64 vom Ventilsitz 63 ab. Die Steuerkammer 28 wird über diesen Druckbegrenzer 80 zum Auslaß hin entlüftet, so daß der Steuerdruck absinkt und der Schließkörper 7 des Hauptventils in der zuvor geschilderten Weise in Richtung Ventilsitz 6 bewegt wird. Hierdurch wird der zuvor eingestellte maximale Ausgangsdruck wiederhergestellt, und zwar unabhängig von einer etwaigen weiteren Erhöhung des Erregerstroms in der Tauchspule 13 (vgl. Fig. 4c). Im Modulationsbereich des Druckreglers zwischen Minimaldruck Pₘᵢₙ und Pₘₐₓ erfolgt die Druckreglung durch Ändern des Erregerstroms I. Wiederum ist mit der Schraube 38 der Nullpunkt der Modulationskennlinie einstellbar (vgl. Fig. 4c).

Wird der Erregerstrom abgeschaltet, so schließt die Feder 25 das Servoventil 21,22 und öffnet zugleich das Hilfsventil 81,82. Damit wird der Steuerdruck in der Kammer 28 über das genannte Steuerventil und die Kanäle 85 und 35 zum Auslaß hin abgebaut, so daß auch das Hauptventil 6,7 schließt.

Wie ein Vergleich der Ausführungsbeispiele zeigt, sind im Rahmen der Erfindung zahlreiche Abwandlungen hinsichtlich der Begrenzung des Ausgangsdrucks auf elektrischem oder mechanischem Wege möglich. Anstelle eines Tauchspulantriebs könnte auch ein anderer elektromagnetischer Antrieb, beispielsweise ein Tauchankerantrieb vorgesehen sein. Der Tauchspulantrieb zeichnet sich jedoch durch äußerst geringe zu bewegende Massen aus und ist deshalb besonders schnell und mit geringem Stromaufwand zu steuern.

## Patentansprüche

1. Membrangesteuerter Gasdruckregler mit
a) einem von einer Membran (16) getragenen Schließkörper (7) eines zwischen Gaseinlaß (4) und Gasaulaß (5) angeordneten, vom Einlaßdruck in Schließrichtung beaufschlagten Hauptgasventils (6, 7);
b) einer auf die Membran einwirkenden Feder (26);
c) einem den Steuerdruck in der Antriebskammer (28) der Membran (16) beeinflussenden Servoventil (21, 22); und
d) einem den Schließkörper (22) des Servoventils (21, 22) beeinflussenden elektromagnetischen Antrieb (9-14);
**dadurch gekennzeichnet**, daß
e) die Membran (16) durch eine sich einseitig gehäusefest abstützende relativ weiche Feder (26) in Schließrichtung des Hauptgasventils (6, 7) vorgespannt ist;
f) die Membran (16) den Ventilsitz (21) des Servoventils (21, 22) trägt;
g) dieser Ventilsitz (21) auf der seinem Schließkörper (22) abgewandten Seite in die durch die Membran (16) abgeschlossene Antriebskamer (28) mündet;
h) der Schließkörper (22) des Servoventils (21, 22) an einer durch den Ventilsitz (21) hindurchragenden Ventilstange (23) befestigt ist;
i) eine sich einseitig gehäusefest abstützende zweite, stärkere Feder (25) an der Ventilstange (23) angreift und diese in Schließrichtung des Servoventils (21, 22) vorspannt;
j) der elektromagnetische Antrieb auf die Ventilstange (23) in öffnungsrichtung des Servoventils (21, 22) einwirkt; und
k) zwischen der Antriebskammer (28) und dem Gasauslaß (5) ein mit einer Verengung (37; 63, 64) versehener Durchlaßkanal (35; 86) vorgesehen ist.

2. Druckregler nach Anspruch 1, **dadurch gekennzeichnet**, daß die Verengung des Durchlaßkanals (35) durch eine Drosselstelle (32,70) gebildet ist (Fig. 1).

3. Druckregler nach Anspruch 1, **dadurch gekennzeichnet**, daß die Drosselstelle durch ein den Maximaldruck begrenzendes Hilfsventil (61-69) gebildet ist (Fig. 2 und 3).

4. Druckregler nach Anspruch 3, **dadurch gekennzeichnet**, daß ein den Minimaldruck bestimmendes weiteres Hilfsventil (45-51) vorgesehen ist (Fig. 2).

5. Druckregler nach Anspruch 3 oder 4, **dadurch gekennzeichnet**, daß das oder jedes Hilfsventil einen von einer Membran (65,47) getragenen Schließkörper (64,46), eine die Membran in Schließrichtung vorspannende Feder (66,48) sowie eine die gehäusefeste Abstützung dieser Feder bildende Einstellschraube (67,49) aufweist.

6. Druckregler nach Anspruch 3, **dadurch gekennzeichnet**, daß
a) die Ventilstange (23) durch eine die Antriebskammer (28) begrenzende Trennwand (83) hindurchragt und an ihrem, dem Servoventil (21,22) abgewandten Ende den Schließkörper (81) eines Steuerventils (81,82,25) trägt;
b) der Ventilsitz (82) des Steuerventils in der Trennwand (83) angeordnet ist;
c) der elektromagnetische Antrieb (9-14) über eine Trennmembran (31) in Schließrichtung des Steuerventils (81,82,25) auf die Ventilstange (23) einwirkt; und
d) der Raum (84) zwischen Trennmembran (31) und Trennwand (83) über einen Kanal (85,35) mit dem Auslaß (36) in Verbindung steht (Fig. 3).

7. Druckregler nach einem der Ansprüche 1 bis 6, **dadurch gekennzeichnet**, daß der elektromagnetische Antrieb ein gehäusefestes Magnetjoch (9-12) und eine in einem Ringspalt des Jochs bewegliche Tauchspule (13,14) aufweist.

## Claims

1. Diaphragm-operated gas pressure regulator comprising:
a) a closure member (7) of a main gas valve (6, 7) provided between a gas inlet (4) and a gas outlet, wherein said closure member is carried by a diaphragm (16) and is exposed to the inlet pressure acting in closing direction;
b) a spring (26) acting upon said diaphragm;
c) a servo valve (21, 22) controlling the control pressure within an operating chamber (28) for said diaphragm (16); and
d) a solenoid operator (9 to 14) acting upon the closure member (22) of said servo valve (21, 22);
**characterized in that**
e) the diaphragm (16) is spring biased in closing direction of the main valve (6, 7) by means of a relatively soft spring (26) which at its one side abuts against the housing;
f) said diaphragm (16) carries the valve seat (21) of the servo valve (21, 22);
g) said valve seat (21), with its side remote from its closure member (22), ports into said operating chamber (28) which is closed by said diaphragm (16);
h) the closure member (22) of the servo valve (21, 22) is connected to a valve rod (23) extending through said valve seat (21); i) a second, stronger spring (25) with its one end abuts against the housing and with its other end engages said valve rod (23) spring-biasing this valve rod in closing direction of the servo valve (21, 22);
j) the solenoid operator acts upon the valve rod (23) in closing direction of the servo valve; and
k) a channel (35, 86) comprising a restriction (37; 63, 64) is provided between the operating chamber (28) and the gas outlet (5).

2. Pressure regulator according to claim 1, **characterized in that** the restriction of the flow channel (35) is formed by a throttle (32, 70).

3. Pressure regulator according to claim 1, **characterized in that** the restriction is formed by an auxiliary valve (61 to 69) limiting the maximum pressure (Fig. 2 and 3).

4. Pressure regulator according to claim 3, **characterized in that** a further auxiliary valve (45 to 51) is provided for determining the minimum pressure (Fig. 2).

5. Pressure regulator according to claim 3 or 4, **characterized in that** the or both auxiliary valves comprise a closure member (64, 46) carried by a diaphragm (65, 47), further comprise a spring (66, 48) biasing the diaphragm in closing direction, and comprise an adjustment screw (67, 69) constituting the stationary abutment of said spring.

6. Pressure regulator according to claim 3, **characterized in that**
a) the valve rod (23) projects through a separation wall (83) which limits the operating chamber (28), with said valve rod carrying at its one end, which is remote from the servo valve (21, 22), the closure member (81) of a control valve (81, 82, 25);
b) the valve seat (28) of the control valve is provided within the separation wall (83);
c) the solenoid operator (9 to 14) acts upon the valve rod (23) in closing direction of the control valve (81, 82, 25) via a separation diaphragm (31); and
d) the space (84) between the separation diaphragm (31) and the separation wall (81) is connected to the outlet (36) via a channel (85, 35) (Figure 3).

7. Pressure regulator according to one of the claims 1 to 6, **characterized in that** the solenoid operator comprises a stationary magnetic yoke (9 to 12) and a moving coil (13, 14) movable within an annular gap of said yoke.

## Revendications

1. Régulateur de pression de gaz commandé par une membrane, comportant
a) un corps de fermeture (7), supporté par une membrane (16), d'une soupape de gaz principale (6, 7) disposée entre une entrée de gaz (4) et une sortie de gaz (5), activée dans la direction de fermeture par la pression d'entrée ;
b) un ressort (26) agissant sur la membrane ;
c) une servo-soupape (21, 22) influençant la pression de commande dans la chambre de commande (28) de la membrane (16) ; et
d) un dispositif d'actionnement électromagnétique (9 à 14) influençant le corps de fermeture (22) de la servo-soupape (21, 22) ;
caractérisé en ce que
e) la membrane (16) est mise en précontrainte dans la direction de fermeture de la soupape de gaz principale (6, 7) par un ressort (26) relativement souple s'appuyant, d'un côté, fermement au boîtier ;
(f) la membrane (16) supporte le siège de soupape (21) de la servo-soupape (21, 22) ;
(g) ce siège de soupape (21) débouche sur le côté détourné de son corps de fermeture (22), dans la chambre de commande (28) fermée par la membrane (16) ;
(h) le corps de fermeture (22) de la servo-soupape (21, 22) est fixé à une tige de soupape (23) faisant saillie à travers le siège de soupape (21) ;
(i) un deuxième ressort (25) plus dur s'appuyant, d'un côté, fermement au boîtier agit sur la tige de soupape (23) et met celle-ci en précontrainte dans la direction de fermeture de la servo-soupape (21, 22) ;
j) le dispositif d'actionnement électromagnétique agit sur la tige de soupape (23) dans la direction d'ouverture de la servo-soupape (21, 22) ; et
k) un conduit de passage (35, 86), pourvu d'un rétrécissement (37 ; 63, 64), est prévu entre la chambre de commande (28) et la sortie de gaz (5).

2. Régulateur de pression selon la revendication 1, caractérisé en ce que le rétrécissement du conduit de passage (35) est formé par un étrangleur (32, 70).

3. Régulateur de pression selon la revendication 1, caractérisé en ce que l'étrangleur est formé par une soupape auxiliaire (61 à 69) limitant la pression maximale (figures 2 et 3).

4. Régulateur de pression selon la revendication 3, caractérisé en ce qu'une autre soupape auxiliaire (45 à 51) est prévue pour déterminer la pression minimale (figure 2).

5. Régulateur de pression selon la revendication 3 ou 4, caractérisé en ce que la, ou chaque, soupape auxiliaire présente un corps de fermeture (64, 46) supporté par une membrane (65, 47), un ressort (66, 48) mettant cette dernière en précontrainte dans la direction de fermeture, ainsi qu'une vis de réglage (67, 49) assurant l'appui de ce ressort fermement au boîtier.

6. Régulateur de pression selon la revendication 3, caractérisé en ce que
a) la tige de soupape (23) fait saillie à travers une cloison (83) limitant la chambre d'actionnement (28) et supporte, à son extrémité détournée de la servo-soupape (21, 22), le corps de fermeture (81) d'une soupape de commande (81, 82, 25) ;
b) le siège de soupape (82) de la soupape de commande est disposé dans la cloison (83) ;
c) le dispositif d'actionnement électromagnétique (9 à 14) agit, par l'intermédiaire d'une membrane de séparation (31), sur la tige de soupape (23), dans la direction de fermeture de la soupape de commande (81, 82, 25) ; et
d) l'espace (84) entre la membrane de séparation (31) et la cloison (83) se trouve en liaison avec la sortie (36) par l'intermédiaire d'un conduit (85, 35).

7. Régulateur de pression selon l'une des revendications 1 à 6, caractérisé en ce que le dispositif d'actionnement électromagnétique présente une culasse d'aimant (9 à 12) fixée au boîtier et une bobine mobile (13, 14) se déplaçant dans un passage annulaire de la culasse.
